# EUROPÄISCHE PATENTSCHRIFT

(11) **EP 2 558 821 B1**
(45) Veröffentlichungstag und Bekanntmachung des Hinweises auf die Patenterteilung: **23.03.2022**
(21) Anmeldenummer: 11719994.3
(22) Anmeldetag: 15.04.2011
(51) Int. Cl.: G01F 15/00, G01K 17/06, G01D 4/00, G01F 15/06

(54) **VORRICHTUNG ZUR ÜBERWACHUNG UND/ODER STEUERUNG DES ENERGIE- UND WASSERHAUSHALTS**
APPARATUS FOR MONITORING AND/OR CONTROLLING ENERGY AND WATER MANAGEMENT
DISPOSITIF DE SURVEILLANCE ET/OU DE COMMANDE DU BILAN HYDRIQUE ET ÉNERGÉTIQUE

(30) Priorität: 15.04.2010 AT 6132010
(43) Veröffentlichungstag der Anmeldung: 20.02.2013
(73) Patentinhaber: Ploder, Edwin, 8850 Murrau (AT)
(72) Erfinder: Ploder, Edwin, 8850 Murrau (AT)
(74) Vertreter: Gibler & Poth Patentanwälte KG
(86) Internationale Anmeldenummer: PCT/AT2011/000186
(87) Internationale Veröffentlichungsnummer: WO 2011/127514

(56) Entgegenhaltungen:
- EP-A2- 0 841 546
- WO-A1-02/084309
- WO-A1-2009/104166
- DE-A1- 19 638 614
- GB-A- 2 224 850
- GB-A- 2 431 754

## Beschreibung

Die Erfindung betrifft ein System gemäß dem Oberbegriff des Patentanspruches 1. Eine Vorrichtung zur Energiemessung und Bewertung der Leistungsaufnahme ist aus der AT 392 163 bekannt. Der Teilnehmer ist üblicherweise ein Privathaushalt oder ein Unternehmen. Der Teilnehmer umfasst mehrere Verbraucher, davon wenigstens einen Wasserverbraucher, wenigsten einen Wärmeverbraucher und wenigsten einen elektrischen Verbraucher.

Herkömmliche derartige Vorrichtungen haben den Nachteil, dass das mögliche Einsparungspotenzial oftmals nur unzureichend genutzt wird.

Die GB 2 431 754 A zeigt eine Vorrichtung zur Überwachung des Energie- und Wasserhaushalts, wobei auch die Anzeige von CO₂-Emissions-Daten vorgesehen ist. Die WO 2009/104166 A1 beschreibt das Management eines Energieverteilungsnetzwerkes, wobei vorgesehen ist im Falle eines zu hohen Energieverbrauches einzelnen Netzwerkteilnehmern seitens des Energieversorgers abzuschalten.

Aufgabe der Erfindung ist es eine Vorrichtung der eingangs genannten Art anzugeben, mit welcher Einsparungspotenzial zuverlässig identifiziert und geringe CO₂-Emissionen des Teilnehmers gewährleistet werden können.

Erfindungsgemäß wird dies durch die Merkmale des Patentanspruches 1 erreicht. Dadurch ergibt sich der Vorteil, dass neben dem Energieverbrauch, welcher sich aus dem Energieverbrauch in Form elektrischer Energie und in Form von Wärme zusammensetzt, auch der Wasserverbrauch mitberücksichtigt wird und dass durch die Anzeige der jeweils aktuell beim Teilnehmer anfallenden Kosten und der jeweils aktuell durch den Teilnehmer verursachten CO₂-Emission gewährleistet ist, dass ein Kosten- und/oder Emissionsverantwortlicher, beispielsweise ein Angestellter des Unternehmens oder ein Mitglied des Haushaltes, insbesondere der Haushaltsvorstand, laufend die aktuellen Kosten und die aktuell verursachten CO₂-Emissionen überblickt und laufend Energieeinsparungsmaßnahmen treffen kann. Vorteilhaft dabei ist weiters, dass Energieeinsparungsmaßnahmen nicht einseitig getroffen werden, da Energie- und Wasserverbrauch gleichermaßen aktuell ermittelt und angezeigt werden, sodass die Gesamtheit der Wasser- und Energiebilanz des Teilnehmers deutlich verbessert werden kann. Dadurch ergibt sich der weitere Vorteil, dass besonders flexible Kosten-Verrechnungsmodelle und besonders flexible CO₂-Zertifikatverrechnungsmodelle vom Teilnehmer 2 genutzt werden können,

Die Unteransprüche, welche ebenso wie der Patentanspruch 1 gleichzeitig einen Teil der Beschreibung bilden, betreffen weitere vorteilhafte Ausgestaltungen der Erfindung.

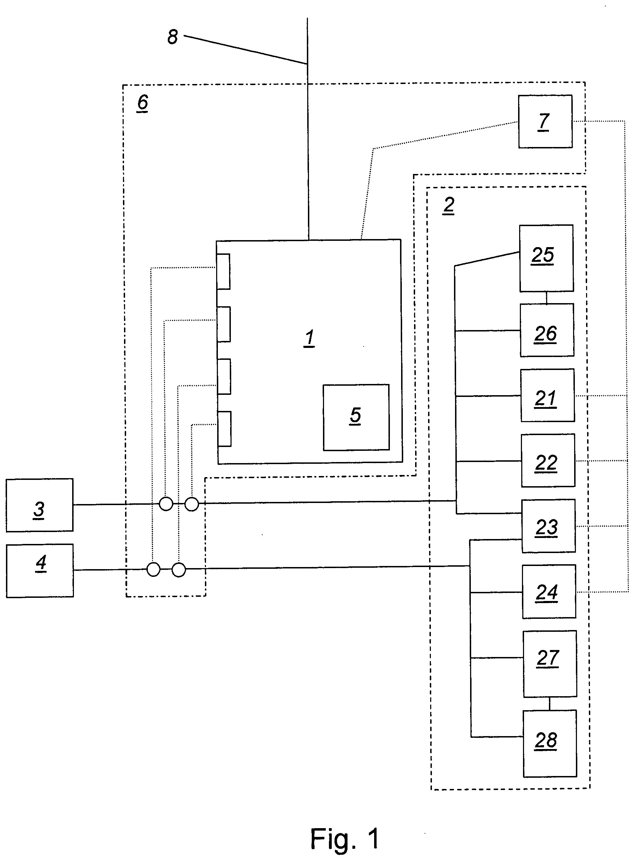

Die Erfindung wird unter Bezugnahme auf die beigeschlossene Zeichnung näher beschrieben. Dabei zeigt Fig. 1 schematisch ein Blockschaltbild eines die Vorrichtung umfassenden Systems, den Teilnehmer und Teile des Energieverteilungs- und des Wasserverteilungsnetzes.

Die Fig. 1 zeigt eine Vorrichtung 1 zur Überwachung und/oder Steuerung des Energie- und Wasserhaushalts wenigstens eines Teilnehmers 2 eines Energieverteilungsnetzes 3 und eines Wasserverteilungsnetzes 4. Um Einsparungspotenzial zuverlässig zu identifizieren und um geringe CO₂-Emissionen des Haushalts gewährleisten zu können wird bei der Vorrichtung vorgeschlagen, dass die Vorrichtung 1 wenigstens eine erste Schnittstelle zum Anschluss eines Energieaufnahmezählers sowie eine zweite Schnittstelle zum Anschluss eines Wasseraufnahmezählers aufweist, und dass die Vorrichtung 1 weiters eine Anordnung 5 zur Ermittlung und Anzeige der jeweils aktuell beim Teilnehmer 2 anfallenden Kosten und der jeweils aktuell durch den Teilnehmer 2 verursachten CO₂-Emission aufweist.

Vorteilhaft an der Vorrichtung ist, dass mittels der Vorrichtung der elektrische Energieverbrauch und der Wärmeenergieverbrauch ermittelt werden können und dann aktuell die Kosten und die verursachte CO₂-Emission angezeigt werden. Vorteilhaft dabei ist die laufende Überwachung der aktuellen Energie- und Wasserverbauchsituation. Vorteilhaft dabei ist, dass Maßnahmen zur Reduktion des Energie- und/oder Wasserverbrauchs besonders schnell deren Auswirkungen anzeigen, sodass laufend und vor allem unkompliziert einfach Maßnahmen zur Reduktion des Energie- und/oder Wasserverbrauchs identifizierbar sind. Der Teilnehmer 2 umfasst mehrere Verbraucher, davon wenigstens einen Wasserverbraucher 23, 24, beispielsweise eine Wasserentnahme 24, insbesondere ein WC, ein Waschbecken und/oder eine Dusche, oder ein wasserverbrauchendes elektrisches Gerät 23, beispielsweise eine Waschmaschine, wenigsten einen Wärmeverbraucher 21, beispielsweise eine Heizung, insbesondere eine elektrische, eine Gas- oder eine Öl-Heizung, und wenigsten einen elektrischen Verbraucher 22, beispielsweise einen Fernseher oder eine elektrische Lichtquelle. Der Teilnehmer 2 ist üblicherweise ein Privathaushalt oder ein Unternehmen. Ein Kosten- und/oder Emissionsverantwortlicher, beispielsweise ein Angestellter des Unternehmens oder ein Mitglied des Haushaltes, insbesondere der Haushaltsvorstand, kann die aktuell ermittelten

### [Weiter auf Seite 3 der ursprünglich eingereichten Beschreibung]

Kosten und CO₂-Emission an der Anzeige ablesen und in vorteilhafter Weise für eine Kostenplanung und eine Planung von Einsparungsmaßnahmen nutzen. Vorteilhaft dabei ist, dass Energieeinsparungsmaßnahmen nicht einseitig getroffen werden, da Energie- und Wasserverbrauch gleichermaßen aktuell ermittelt und angezeigt werden, sodass die Gesamtenergiebilanz des Teilnehmers deutlich verbessert werden kann. Dadurch ergibt sich der weitere Vorteil, dass besonders flexible Kosten-Verrechnungsmodelle und besonders flexible CO₂-Zertifikatverrechnungsmodelle vom Teilnehmer 2 genutzt werden können. Auch ein Verfahren zur Überwachung und/oder Steuerung des Energie- und Wasserhaushalts wenigstens des einen Teilnehmers 2 des Energieverteilungsnetzes 3 und des Wasserverteilungsnetzes 4 ermöglich diese Vorteile und vorteilhaften Wirkungen, wenn in vorteilhafter Weise vorgesehen ist, dass jeweils aktuelle erste Daten sämtlicher Energie- und Wasseraufnahmen aus dem Energieverteilungsnetz 3 und aus dem Wasserverteilungsnetz 4 ermittelt werden, dass aus den ersten Daten die jeweils aktuell beim Teilnehmer 2 anfallenden Kosten und die jeweils aktuell durch den Teilnehmer 2 verursachte CO₂-Emission ermittelt und angezeigt werden. Das Verfahren kann insbesondere unter Verwendung der Vorrichtung 1 durchgeführt werden, wobei die ersten Daten mittels des Energieaufnahmezählers und des Wasseraufnahmezählers ermittelt werden.

In vorteilhafter Weiterbildung der Vorrichtung kann die Vorrichtung ausgebildet sein um den Energie- und Wasserhaushalt mehrerer Teilnehmer zu überwachen und/oder zu steuern. Insbesondere kann die zur Überwachung und/oder Steuerung des Energie- und Wasserhaushalts eines Verbunds von Haushalten, beispielsweise ein Zinshaus oder eine Wohnungsanlage umfassend mehrere Wohnungen, oder von mehreren Unternehmensstandorten vorgesehen sein.

Der Teilnehmer 2 kann weiters eine Energiequelle 25, beispielsweise eine Fotovoltaikanlage und/oder eine Wärmesolaranlage, und/oder eine Wasserquelle 27, beispielsweise einen Brunnen, umfassen. Somit kann der Teilnehmer 2 Energie in das Energieverteilungsnetz 3 und/oder Wasser in das Wasserverteilungsnetz 4 einspeisen. Um die eingespeiste Energie und/oder das eingespeiste Wasser bei den Kosten für den Teilnehmer 2 und bei der CO₂-Emission des Teilnehmers 2 zu berücksichtigen, kann in Weiterbildung des Verfahrens vorgesehen sein, dass jeweils aktuelle dritte Daten sämtlicher Energie- und/oder Wassereinspeisungen in das Energie- bzw. das Wasserverteilungsnetz 3, 4 ermittelt werden, und dass die anfallenden Kosten sowie die verursachte CO₂-Emission um die dritten Daten berichtigt werden. Um die eingespeiste Energie und/oder das eingespeiste Wasser bei den Kosten und bei der CO₂-Emission zu berücksichtigen, kann in Weiterbildung der Vorrichtung vorgesehen sein, dass die Vorrichtung 1 weiters eine dritte Schnittstelle zum Anschluss eines Energieabgabezählers und/oder weiters eine vierte Schnittstelle zum Anschluss eines Wasserabgabezählers aufweist, wie dies ebenfalls schematisch in Fig. 1 dargestellt ist. Der Energieabgabezähler und der Wasserabgabezähler sind dabei zur Ermittelung der dritten Daten vorgesehen.

In Fig. 1 ist auch ein System 6 zur Überwachung und/oder Steuerung des Energie- und Wasserhaushalts des wenigstens einen Teilnehmers 2 des Energieverteilungsnetzes 3 und des Wasserverteilungsnetzes 4 schematisch dargestellt, welches System 6 die in Fig. 1 dargestellte Vorrichtung 1 umfasst, wobei an die erste Schnittstelle wenigstens einer des zumindest einen Energieaufnahmezählers angeschlossen ist, und wobei an die zweite Schnittstelle wenigstens einer des zumindest einen Wasseraufnahmezählers angeschlossen ist, und wobei der zumindest eine Energieaufnahmezähler und der zumindest eine Wasseraufnahmezähler vom System 6 umfasst sind.

Weiters kann das System 6 wenigstens einen Energieabgabezähler und/oder wenigstens einen Wasserabgabezähler umfassen, wobei der Energieabgabezähler an die dritte Schnittstelle angeschlossen ist bzw. der Wasserabgabezähler an die vierte Schnittstelle angeschlossen ist. Dies ist ebenfalls schematisch in Fig. 1 dargestellt.

Der Energieaufnahmezähler, der Wasseraufnahmezähler, der Energieabgabezähler und der Wasserabgabezähler sind in Fig. 1 sind schematisch als Kreise und die jeweiligen Anschlüsse dieser an die Vorrichtung 1 sind schematisch als punktierte Linien dargestellt. Die Energieaufnahmezähler, der Wasseraufnahmezähler, der Energieabgabezähler und der Wasserabgabezähler können mittels Funk- und/oder Kabelverbindung an die Vorrichtung 1 angeschlossen sein.

Die Systemgrenzen des Systems 6 sind in Fig. 1 schematisch mittels strichpunktierter Linie dargestellt. Die Systemgrenzen des Teilnehmers 2 sind in Fig. 1 schematisch mittels gestrichelter Linie dargestellt.

Der Energieaufnahmezähler kann insbesondere einen Stromzähler zum Erfassen der vom Teilnehmer 2 aufgenommenen elektrischen Energie, einen Wärmeenergiezähler zum Erfassen der vom Teilnehmer aufgenommenen Wärmeenergie und/oder einen Gaszähler zum Erfassen des Gasverbrauches umfassen. Der Wasseraufnahmezähler kann insbesondere einen Durchflussmesser umfassen.

Der Energieabgabezähler kann insbesondere einen Stromzähler zum Erfassen der vom Teilnehmer 2 ausgegebenen elektrischen Energie und/oder einen Wärmeenergiezähler zum Erfassen der vom Teilnehmer abgegebenen Wärmeenergie umfassen. Der Wasserabgabezähler kann insbesondere einen Durchflussmesser umfassen.

Die Vorrichtung 1 bzw. das System 6 sind selbst Verbraucher 21 - 24 des Teilnehmers 2 und sind somit vom Teilnehmer 2 umfasst.

In vorteilhafter Weise kann das Verfahren derart weitergebildet werden, dass jeweils aktuelle zweite Daten hinsichtlich einem Verbrauch lokal bereitgestellter Energie, insbesondere eines lokal gespeicherten Energieträgers, wie etwa Öl oder Holz, und/oder wie diese durch eine, insbesondere vom Teilnehmer 2 umfasste, Photovoltaik, eine, insbesondere vom Teilnehmer 2 umfasste, thermische Solaranlage und/oder eine, insbesondere vom Teilnehmer 2 umfasste, Wärmepumpenanlage lokal bereitstellbar ist, ermittelt werden, und dass die Kosten sowie die verursachte CO₂-Emission um die zweiten Daten berichtigt werden. Zum lokalen Speichern der lokal bereitgestellten Energie kann der Teilnehmer 2 einen Energiespeicher 26, beispielsweise einen Öltank, einen Kohle-, einen Holzraum, einen Wärmespeicher zum Speichern von Wärmeenergie und/oder einen Akkumulator zum Speichern elektrischer Energie umfassen. Zum lokalen Speichern von Wasser kann der Teilnehmer 2 einen Wasserspeicher 28, beispielsweise ein Becken oder einen Tank, umfassen. Zur Erfassung der zweiten Daten kann die Vorrichtung 1 einen fünften und/oder einen sechsten Anschluss aufweisen, wobei an dem fünften Anschluss ein zweiter Energieaufnahmezähler, zum Ermitteln des aktuellen Verbrauchs der lokal gespeicherten Energie, und an dem sechsten Anschluss ein zweiter Wasseraufnahmezähler, zum Ermitteln des aktuellen Verbrauchs des lokal gespeicherten Wassers, angeschlossen sind.

In vorteilhafter Ausgestaltung des Verfahrens kann weiters vorgesehen sein, dass - zur Ermittlung der jeweils aktuellen Kosten - wenigstens ein aktueller Tarif abgefragt wird. Das jeweilig gültige Tarifmodell kann lokal, insbesondere in der Vorrichtung 1, gespeichert sein oder kann aktuell beim Energieversorgungsunternehmen, beispielsweise einem Stromlieferanten, und/oder beim Wasserversorgungsunternehmen, beispielsweise bei einer für den Teilnehmer 2 zuständigen Gemeinde, abgefragt werden. Damit der aktuelle Tarif beim Energieversorgungsunternehmen bzw. beim Wasserversorgungsunternehmen abgefragt werden kann, kann das System 6 eine Kommunikationsschnittstelle 8 umfassen, sodass die Vorrichtung 1 eine Kommunikationsverbindung zu einer Steuerzentrale eines Energieversorgungsunternehmens und/oder eines Wasserversorgungsuntemehmens aufweist. Die Kommunikationsverbindung kann drahtlos, beispielsweise mittel Funkverbindung, oder mittels Kabelverbindung, beispielsweise mittels Telefonverbindung, ausgebildet sein.

In besonders vorteilhafter Weiterbildung des Verfahrens kann vorgesehen sein, dass bei Überschreiten vorgebbarer Grenzwerte durch die Kosten bzw. die CO₂-Emission ein Alarmsignal ausgegeben wird. Zur Ausgabe des Alarmsignals kann die Anordnung 5 einen Alarmsignalgeber umfassen. Vorteilhaft dabei ist, dass eine Person, insbesondere eine verantwortliche Person, derart schnell und zuverlässige auf Missstände und Probleme aufmerksam gemacht wird.

In vorteilhafter Weiterbildung des Verfahrens kann vorgesehen sein, dass dem Teilnehmer 2 eine gegebenenfalls auftretende kritische Energie- und/oder Wasserversorgungslage angezeigt wird. Vorteilhaft dabei ist, dass die Person bereits vorbeugend auf möglicherweise in der Zukunft, insbesondere in der nahen Zukunft, auftretende Missstände und Probleme aufmerksam gemacht wird. Dadurch kann die Person schon vor Eintreffen der Missstände Gegenmaßnahmen einleiten, beispielsweise bestimmte Verbraucher 21, 22, 23 24 abschalten und gegebenenfalls gänzlich vom Energieverteilungsnetz 3 und/oder vom Wasserverteilungsnetz 4 trennen.

Insbesondere kann vorgesehen sein, dass das Verfahren in Abhängigkeit eines vorgebbaren ersten Leistungsgrenzwertes der Energieaufnahme, beispielsweise 2000 Watt, entweder in einem Niedrigtarifbetrieb oder in einen Hochtarifbetrieb betrieben wird, wobei der Niedrigtarifbetrieb beim Teilnehmer 2 geringere Kosten je verbrauchter Kilowattstunde als der Hochtarifbetrieb verursacht, wobei insbesondere laufend angezeigt werden kann, ob Niedrigtarifbetrieb oder Hochtarifbetrieb vorliegt. Der Niedrigtarifbetrieb ist bei einer Energieaufnahme des Teilnehmers 2 gegeben, deren Leistung geringer als der erste Leistungsgrenzwert ist, wobei der Tarif der Energie im Niedrigtarifbetrieb geringer ist als der Tarif im Hochtarifbetrieb. Vorteilhaft dabei ist, dass die verantwortlichen Personen zum Energiesparen bewegt werden können. Derart können auch veränderliche Tarife für die verbrauchte Energie zeitunabhängig angeboten werden. Situationsabhängig kann als erster Leistungsgrenzwert der Energieaufnahme auch einer anderer Wert als 2000 Watt vorgegeben werden.

Insbesondere kann vorgesehen sein, dass das Verfahren in Abhängigkeit eines vorgebbaren ersten Wasseraufnahmegrenzwertes, beispielsweise 250 Liter pro Tag, entweder in einem Niedrigverbrauchbetrieb oder in einen Hochverbrauchbetrieb betrieben wird. Wenn vom Teilnehmer 2 weniger als der erste Wasseraufnahmegrenzwert verbraucht wird, liegt Niedrigverbrauchbetrieb vor, wobei der Niedrigverbrauchbetrieb beim Teilnehmer 2 geringere Kosten je vom Teilnehmer 2 aus dem Wasserverteilungsnetz 4 aufgenommenen Liter Wassers als der Hochverbrauchbetrieb verursacht. Insbesondere kann laufend angezeigt werden, ob Niedrigverbrauchbetrieb oder Hochverbrauchbetrieb vorliegt. Vorteilhaft dabei ist, dass die verantwortlichen Personen zum Wassersparen bewegt werden können. Situationsabhängig kann als erster Wasseraufnahmegrenzwert auch einer anderer Wert als 250 Liter pro Tag vorgegeben werden.

Insbesondere kann vorgesehen sein, dass die Vorrichtung 1 einen Speicher zur Speicherung der jeweils aktuell beim Teilnehmer 2 anfallenden Kosten und der jeweils durch den Teilnehmer 2 verursachten CO₂-Emssionen aufweist, womit eine mit dem veränderlichen Energieverbrauch veränderlicher Tarif berücksichtigt werden kann. Der Speicher kann insbesondere zur laufenden Aufzeichnung ob Niedrigtarifbetrieb oder Hochtarifbetrieb vorliegt ausgebildet sein. Die im Speicher abgespeicherten Daten können in regelmäßigen Zeitabständen, beispielsweise stündlich, täglich, wöchentlich, monatlich oder jährlich, aus dem Speicher der Vorrichtung, insbesondere mittels Fernablesung, auslesen werden. Insbesondere kann vorgesehen sein, dass im Fall eines Überschreitens eines vorgebbaren zweiten Leistungsgrenzwertes der Energieaufnahme, insbesondere bei einer kritischen Energieversorgung, und/oder bei Überschreitens eines vorgebbaren zweiten Wasseraufnahmegrenzwertes, insbesondere bei einer kritischen Wasserversorgung, wenigstens ein Verbraucher 21, 22, 23 24 des Teilnehmers 2 von der Versorgung mit Energie- und/oder Wasser ausgeschlossen wird. Beispielsweise kann als zweiter Leistungsgrenzwert der Energieaufnahme 5000Watt vorgegeben werden, sodass dem Teilnehmer 2 nicht, oder maximal kurzfristig, möglich ist, mehr als 5000Watt Summenleistung aus elektrischer Energie und Wärmeenergie aus dem Energieverteilungsnetz 3 zu entnehmen. Beispielsweise kann als zweiter Wasseraufnahmegrenzwert 500 Liter pro Tag vorgegeben werden, sodass es dem Teilnehmer 2 nicht möglich ist, mehr als 500 Liter pro Tag Wasser aus dem Wasserverteilungsnetz 4 zu entnehmen. Derart können Energie und/oder Wasser im Fall eines Versorgungsengpasses kontingentiert werden und die für den Teilnehmer 2 verantwortliche Person kann zum nachhaltigen Energiesparen und zum Aufbau alternativer Energiequellen veranlasst werden. Situationsabhängig kann als zweiter Leistungsgrenzwert der Energieaufnahme auch einer anderer Wert als 5000 Watt vorgegeben werden. Situationsabhängig kann als zweiter Wasseraufnahmegrenzwert auch einer anderer Wert als 500 Liter pro Tag vorgegeben werden.

Das Ausschließen des Verbrauchers 21 - 24 wird von der Vorrichtung 1 ausgelöst, welches ein automatisiertes Ausschließen bedeutet. Insbesondere bei Abwesenheit oder Verhinderung der verantwortlichen Person kann das automatisierte Ausschließen von Vorteil sein. Auch kann die dabei besonders kurze Reaktionsdauer zwischen dem Eintreten der kritischen Energie- und/oder Wasserversorgung und dem Ausschließen wenigstens eines der Verbraucher 21 - 24 weiteren Schaden, beispielsweise überhöhte Kosten, eine Überlastung des Energieverteilungsnetzes 3 und/oder des Wasserverteilungsnetzes 4 oder eine überhöhte CO₂-Emission, verhindern.

Insbesondere kann bei dem Verfahren vorgesehen sein, dass wenigstens ein vorgebbarer des wenigstens einen Verbrauchers 21 - 24 aufgrund eines Überschreitens eines vorgebbaren zweiten Tarifs von der Versorgung mit Energie- und/oder Wasser ausgeschlossen wird. Beispielsweise kann ein Elektrowarmwasserspeicher zu Zeiten eines hohen Strompreises von der Inbetriebnahme ausgeschlossen sein. Dadurch können die Kosten für den Teilnehmer 2 gesenkt werden, insbesondere bei Beibehaltung eines hohen Komforts.

Insbesondere kann bei dem Verfahren weiters vorgesehen sein, dass wenigstens ein vorgebbarer des wenigstens einen Verbrauchers 21 - 24 aufgrund eines Unterschreitens eines vorgebbaren ersten Tarifs in Betrieb genommen wird. Beispielsweise kann der Elektrowarmwasserspeicher zu Zeiten eines geringen Strompreises in Betrieb genommen werden, sodass das Wasser im Elektrowarmwasserspeicher vornehmlich mit günstigem Strom erhitzt wird. Das Inbetriebnehmens des vorgebbaren des wenigstens einen Verbrauchers 21 - 24 kann mittels einer vom System umfassten Inbetriebnahmesteuerung erfolgen.

In Weiterbildung des Verfahrens kann weiters vorgesehen sein, dass der wenigstens eine Verbraucher 21 - 24 aufgrund eines externen Abschaltbefehls von der Versorgung mit Energie- und/oder Wasser ausgeschlossen wird. Vorteilhaft dabei ist, dass das Energieversorgungsunternehmen und/oder das Wasserversorgungsunternehmen bei Vorliegen einer kritischen Versorgungslage ferngesteuert Verbraucher abschalten können, um beispielsweise einen Zusammenbruch des Energieverteilungsnetzes 3 bzw. des Wasserverteilungsnetzes 4 zu verhindern.

Zum vorgebbaren Ausschließen einer Inbetriebnahme des Verbrauchers 21 - 24 wird vorgesehen, dass an die Vorrichtung 1 wenigstens ein, durch die Vorrichtung 1 vorgebbar ansteuerbares, Schaltgerät 7 angeschlossen ist. Das Schaltgerät 7 ist damit mit der Vorrichtung 1 wirkverbunden, wie dies in Fig. 1 durch die punktierte Verbindungslinie dargestellt ist. Diese Wirkverbindung kann mittels - an sich bekannter - Funk- und/oder Kabelverbindungen gewährleistet sein. Das Schaltgerät 7 ist weiters mit wenigstens einem der Verbraucher 21 - 24, insbesondere mit sämtlichen der Verbraucher 21 - 24, wirkverbunden. Diese Wirkverbindung kann in vorteilhafter Weise ebenfalls mittels Funk- und/oder Kabelverbindung gewährleistet werden. Die Vorrichtung 1 steuert dabei das Schaltgerät 7. Das Schaltgerät 7 schließt je nach Versorgungslage wiederum einen oder mehrere der Verbraucher 21 - 24 von der Inbetriebnahme aus. Insbesondere kann das Schaltgerät 7 dazu einen oder mehrere der Verbraucher 21 - 24 vom Energieverteilungsnetz 3 und/oder vom Wasserverteilungsnetz 4 abtrennen.

In vorteilhafter Weiterbildung des Schaltgeräts 7 kann es die Inbetriebnahmesteuerung umfassen.

Die Anordnung 5 kann in einer ersten Ausbildung ein Anzeigemittel zur Anzeige der jeweils aktuell beim Teilnehmer 2 anfallenden Kosten und der jeweils aktuell durch den Teilnehmer 2 verursachten CO₂-Emission umfassen.

Die Anordnung 5 kann in einer zweiten Ausbildung ein Übertragungsmittel zur entfernten Anzeige, also einer Fern-Anzeige, der jeweils aktuell beim Teilnehmer 2 anfallenden Kosten und der jeweils aktuell durch den Teilnehmer 2 verursachten CO₂-Emission umfassen. Insbesondere können mittels des Übertragungsmittel Anzeigeinformationen mittels Funk- und/oder Kabelverbindung an zur Vorrichtung 1 entfernte Bediengeräte wie etwa PDA, Mobiltelefone, Computer und/oder Fernsehgeräte übermittelt werden, um vom Bediengerät geeignet angezeigt zu werden. Somit kann die Person, insbesondere die verantwortliche Person, auch fern der Vorrichtung 1 und/oder des Teilnehmers 2 die jeweils aktuell beim Teilnehmer 2 anfallenden Kosten und die jeweils aktuell durch den Teilnehmer 2 verursachten CO₂-Emission ermitteln.

## Patentansprüche

1. System (6) zur Überwachung und/oder Steuerung des Energie- und Wasserhaushalts wenigstens eines Teilnehmers (2) eines Energieverteilungsnetzes (3) und eines Wasserverteilungsnetzes (4), wobei der Teilnehmer (2) ein Privathaushalt oder ein Unternehmen ist, mit einer Vorrichtung (1) zur Überwachung und Steuerung des Energie- und Wasserhaushalts wenigstens eines Teilnehmers (2) eines Energieverteilungsnetzes (3) und eines Wasserverteilungsnetzes (4), wobei die Vorrichtung (1) wenigstens eine erste Schnittstelle aufweist, an welche wenigstens ein Energieaufnahmezähler angeschlossen ist, wobei die Vorrichtung (1) eine zweite Schnittstelle aufweist, an welche wenigstens ein Wasseraufnahmezähler angeschlossen ist, wobei die Vorrichtung (1) weiters eine Anordnung (5) zur Ermittlung und Anzeige der jeweils aktuell beim Teilnehmer (2) anfallenden Kosten und der jeweils aktuell durch den Teilnehmer (2) verursachten CO₂-Emission aufweist, wobei der Teilnehmer (2) mehrere Verbraucher (21, 22, 23, 24) umfasst, wobei die Verbraucher (21, 22, 23, 24) wenigstens einen Wasserverbraucher (23, 24), wenigstens einen Wärmeverbraucher (21) und wenigstens einen elektrischen Verbraucher (22) umfassen, **dadurch gekennzeichnet, dass** an die Vorrichtung (1) wenigstens ein, durch die Vorrichtung (1) vorgebbar ansteuerbares, Schaltgerät (7) angeschlossen ist, zur vorgebbaren Inbetriebnahme der Verbraucher (21, 22, 23, 24) des Teilnehmers (2), dass das Schaltgerät (7) dazu ausgebildet ist je nach Versorgungslage einen oder mehrere der Verbraucher (21, 22, 23, 24) von der Inbetriebnahme auszuschließen und vom Energieverteilungsnetz (3) und/oder vom Wasserverteilungsnetz (4) abzutrennen, und dass die Vorrichtung (1) und/oder das System (6) selbst Verbraucher (21, 22, 23, 24) des Teilnehmers (2) sind und somit vom Teilnehmer (2) umfasst sind.

2. System nach Anspruch 1, **dadurch gekennzeichnet, dass** die Vorrichtung (1) die Verbraucher (21, 22, 23, 24) automatisch ausschließt.

3. System nach Anspruch 1 oder 2, **dadurch gekennzeichnet, dass** die Vorrichtung (1) wenigstens einen Verbraucher (21, 22, 23, 24) aufgrund eines Überschreitens eines vorgebbaren zweiten Tarifs von der Versorgung mit Energie und/oder Wasser auszuschließt.

4. System nach einem der Ansprüche 1 bis 3, **dadurch gekennzeichnet, dass** die Vorrichtung (1) eine dritte Schnittstelle zum Anschluss eines Energieabgabezählers und/oder eine vierte Schnittstelle zum Anschluss eines Wasserabgabezählers aufweist.

5. System nach einem der Ansprüche 1 bis 4, **dadurch gekennzeichnet, dass** die Vorrichtung (1) eine Kommunikationsverbindung zu einer Steuerzentrale eines Energieversorgungsunternehmens und/oder Wasserversorgungsunternehmens aufweist.

## Claims

1. System (6) for monitoring and/or controlling the energy and water management of at least one subscriber (2) of an energy distribution network (3) and of a water distribution network (4), wherein the subscriber (2) is a private household or a company, comprising a device (1) for monitoring and controlling the energy and water management of at least one subscriber (2) of an energy distribution network (3) and of a water distribution network (4), wherein the device (1) has at least one first interface to which at least one energy consumption meter is connected, wherein the device (1) has a second interface to which at least one water consumption meter is connected, wherein the device (1) further has an arrangement (5) for determining and displaying the costs currently incurred by the subscriber (2) and the CO₂ emission currently caused by the subscriber (2), wherein the subscriber (2) comprises a plurality of consumers (21, 22, 23, 24), wherein the consumers (21, 22, 23, 24) comprise at least one water consumer (23, 24), at least one heat consumer (21) and at least one electrical consumer (22), **characterized in that** at least one switching device (7) which can be actuated in a predeterminable manner by the device (1) is connected to the device (1), for the predeterminable operation of the consumers (21, 22, 23, 24) of the subscriber (2), **in that** the switching device (7) is designed to exclude one or more of the consumers (21, 22, 23, 24) from operation and to disconnect them from the energy distribution network (3) and/or from the water distribution network (4) depending on the supply situation, and **in that** the device (1) and/or the system (6) are themselves consumers (21, 22, 23, 24) of the subscriber (2) and are thus included in the subscriber (2).

2. System according to claim 1, **characterized in that** the device (1) automatically excludes the consumers (21, 22, 23, 24).

3. System according to claim 1 or 2, **characterized in that** the device (1) excludes at least one consumer (21, 22, 23, 24) from the supply of energy and/or water on the basis of exceeding a predeterminable second tariff.

4. System according to one of claims 1 to 3, **characterized in that** the device (1) has a third interface for connecting an energy delivery meter and/or a fourth interface for connecting a water delivery meter.

5. System according to one of claims 1 to 4, **characterized in that** the device (1) has a communication link to a control center of an energy supply company and/or water supply company.

## Revendications

1. Système (6) pour la surveillance et/ou la régulation du bilan d'énergie et d'eau d'au moins un groupe raccordé (2) à un réseau de distribution d'énergie (3) et à un réseau de distribution d'eau (4), lequel groupe raccordé (2) est un ménage privé ou une entreprise, avec un dispositif (1) pour la surveillance et la régulation du bilan d'énergie et d'eau d'au moins un groupe raccordé (2) d'un réseau de distribution d'énergie (3) et d'un réseau de distribution d'eau (4), dans lequel le dispositif (1) comprend au moins une première interface à laquelle est raccordé au moins un compteur d'énergie appelée, dans lequel le dispositif (1) comprend une deuxième interface à laquelle est raccordé au moins un compteur d'eau appelée, dans lequel le dispositif (1) comporte en outre une installation (5) pour déterminer et affecter le coût actuellement imputable au groupe raccordé (2) et les émissions de CO₂ actuellement imputables au groupe raccordé (2), dans lequel le groupe raccordé (2) comprend plusieurs consommateurs (21, 22, 23, 24), lesquels consommateurs (21, 22, 23, 24) comprennent au moins un consommateur d'eau (23, 24), au moins un consommateur de chaleur (21) et au moins un consommateur d'électricité (22), **caractérisé en ce qu'**est raccordé au dispositif (1) au moins un appareil de commutation (7) pouvant être actionné de façon prédéterminable par le dispositif (1) pour la mise en service prédéterminable des consommateurs (21, 22, 23, 24) du groupe raccordé (2), **en ce que** l'appareil de commutation (7) est conçu pour exclure un ou plusieurs des consommateurs (21, 22, 23, 24) de la mise en service en fonction de la situation d'alimentation et les couper du réseau de distribution d'énergie (3) et/ou du réseau de distribution d'eau (4) et **en ce que** le dispositif (1) et/ou le système (6) sont eux-mêmes des consommateurs (21, 22, 23, 24) du groupe raccordé (2) et sont ainsi inclus dans le groupe raccordé (2).

2. Système selon la revendication 1, **caractérisé en ce que** le dispositif (1) exclut automatiquement les consommateurs (21, 22, 23, 24).

3. Système selon la revendication 1 ou 2, **caractérisé en ce que** le dispositif (1) exclut au moins un consommateur (21, 22, 23, 24) de l'alimentation en énergie et/ou en eau en raison d'un dépassement d'un deuxième tarif prédéterminable.

4. Système selon l'une des revendications 1 à 3, **caractérisé en ce que** le dispositif (1) comprend une troisième interface pour le raccordement d'un compteur de restitution d'énergie et/ou une quatrième interface pour le raccordement d'un compteur de restitution d'eau.

5. Système selon l'une des revendications 1 à 4, **caractérisé en ce que** le dispositif (1) comporte une liaison de communication vers un central de régulation d'une entreprise de fourniture d'énergie et/ou d'une entreprise de fourniture d'eau.
